(19) Europäisches Patentamt
European Patent Office
Office européen des brevets

(11) EP 2 060 442 A2

(12) **DEMANDE DE BREVET EUROPEEN**

(43) Date de publication:
**20.05.2009 Bulletin 2009/21**

(51) Int Cl.:
***B60Q 1/14*** *(2006.01)*

(21) Numéro de dépôt: **08168564.6**

(22) Date de dépôt: **07.11.2008**

(84) Etats contractants désignés:
**AT BE BG CH CY CZ DE DK EE ES FI FR GB GR HR HU IE IS IT LI LT LU LV MC MT NL NO PL PT RO SE SI SK TR**
Etats d'extension désignés:
**AL BA MK RS**

(30) Priorité: **16.11.2007 FR 0708074**

(71) Demandeur: **Valeo Vision**
**93012 Bobigny Cedex (FR)**

(72) Inventeurs:
- **Albou, Pierre**
**75013 Paris (FR)**
- **Sanchez, Vanesa**
**75011 Paris (FR)**

(54) **Dispositif d'éclairage pour véhicule automobile**

(57) Dispositif d'éclairage propre à donner un faisceau lumineux composé de plusieurs nappes, comprenant : au moins une source lumineuse pour chaque nappe, et un moyen de commande pour éteindre ou allumer, au moins en partie, chaque nappe selon les conditions de circulation afin de créer une bande non éclairée et éviter l'éblouissement d'autres usagers de la route. Le faisceau est composé d'au moins deux nappes lumineuses de base (3,4), chaque nappe lumineuse étant limitée du côté intérieur par un bord essentiellement rectiligne montant, et au moins la nappe (4) située du côté des véhicules venant en sens inverse est composée de plusieurs nappes élémentaires (15a, 15b...15e) en partie superposées, chaque nappe élémentaire étant limitée du côté intérieur par un bord rectiligne essentiellement vertical (16a, 16b, ... 16e), les bords rectilignes des différentes nappes élémentaires étant décalés angulairement en s'écartant de l'axe optique.

FIG.3

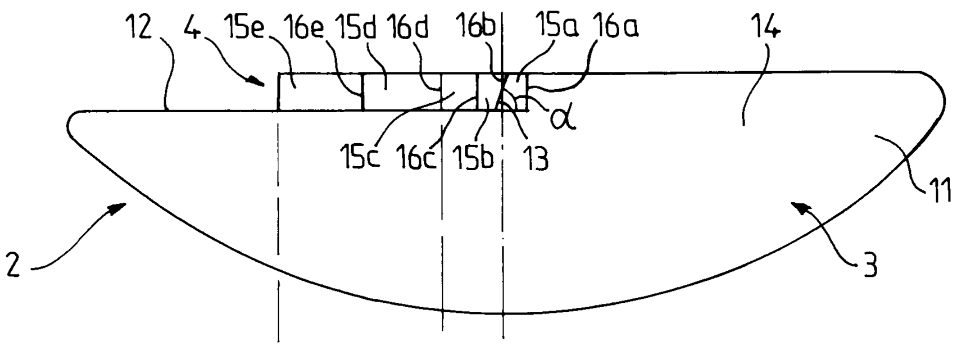


EP 2 060 442 A2

## Description

L'invention est relative à un dispositif d'éclairage, pour véhicule automobile, propre à donner un faisceau lumineux s'étendant de part et d'autre de l'axe optique et composé de plusieurs nappes, ce dispositif comprenant :

- au moins une source lumineuse pour chaque nappe,
- et un moyen de commande pour éteindre ou allumer, au moins en partie, chaque nappe selon les conditions de circulation afin de créer une bande non éclairée, pouvant être comprise entre deux zones éclairées, pour éviter l'éblouissement d'autres usagers de la route se déplaçant en sens inverse ou dans le même sens, tout en conservant un éclairage sur au moins un côté.

Un dispositif d'éclairage de ce type est connu d'après US 2007/0 147 055. Selon ce document, une bande centrale non éclairée peut être obtenue, la largeur et la position angulaire de cette bande étant déterminées pour éviter l'éblouissement d'autres usagers de la route. Toutefois, il est souhaitable que cette bande non éclairée soit mieux adaptée aux conditions de circulation rencontrées.

EP 1 780 462 au nom de la Société déposante concerne un projecteur d'éclairage pour véhicule automobile comportant une pluralité de sources lumineuses, chacune émettant un faisceau lumineux partiel, la superposition des faisceaux lumineux partiels formant un faisceau d'éclairage. Chaque source lumineuse est modulable individuellement pour contrôler le flux lumineux d'au moins un faisceau lumineux partiel émis dans une direction prédéterminée. Il est prévu notamment de créer des zones exemptes de rayons lumineux en fonction d'informations recueillies sur l'environnement du véhicule.

Un tel projecteur donne des résultats satisfaisants, mais la netteté des coupures entre une zone non éclairée et une zone éclairée demande à être améliorée, tout en limitant l'étalement vertical. Il est souhaitable en outre que le coût de tels dispositifs d'éclairage soit limité.

L'invention a pour but, surtout, de fournir un dispositif d'éclairage pour véhicule automobile, du genre défini précédemment, qui permette d'obtenir une bande non éclairée, bien adaptée aux exigences de la circulation, avec des bords nets.

Selon l'invention, un dispositif d'éclairage, pour véhicule automobile, du genre défini précédemment et tel que:

- le faisceau est composé de/ comporte deux nappes lumineuses de base, une nappe s'étendant principalement d'un côté de l'axe optique et l'autre nappe s'étendant principalement de l'autre côté de l'axe optique,
- chaque nappe lumineuse est limitée du côté intérieur par un bord essentiellement rectiligne montant,
- et au moins la nappe située du côté des véhicules venant en sens inverse est composée de plusieurs nappes élémentaires en parties superposées, chaque nappe élémentaire étant limitée du côté intérieur par un bord essentiellement rectiligne montant, les bords rectilignes des différentes nappes élémentaires étant décalés angulairement en s'écartant de l'axe optique,
- au moins une source lumineuse contrôlée par le moyen de commande et un réflecteur associé étant prévus pour chaque nappe élémentaire.

Le bord intérieur de chaque nappe contribuant à délimiter la bande non éclairée peut être réalisé de manière nette car aucune exigence particulière n'est formulée pour l'autre bord de la nappe.

Par « côté intérieur », ou « bord intérieur » d'une nappe on désigne le bord le plus proche de l'axe optique. Pour la nappe située du côté des véhicules venant en sens inverse, le bord intérieur est celui éloigné des véhicules croisés ; dans le cas d'un trafic à droite, il s'agit de la nappe située à gauche et son bord intérieur est le bord droit. Pour la nappe située du bas-côté de la route, le bord intérieur est celui éloigné du bas-côté ; dans le cas d'un trafic à droite, il s'agit de la nappe située à droite et son bord intérieur est le bord gauche.

Par bord « montant », on comprend un bord disposé verticalement, ou substantiellement verticalement, ou essentiellement vertical (ou, éventuellement, plus ou moins oblique par rapport à la verticale, mais pas horizontal).

L'invention concerne ainsi la possibilité de faire plusieurs faisceaux lumineux/nappes lumineuses, chaque faisceau/nappe présentant une coupure verticale ou essentiellement verticale, ce qui permet, par extinction sélective, d'obtenir un faisceau global avec un ou des « trous noirs ». A noter aussi le fait que les nappes sont en partie superposées, elles se recouvrent donc partiellement.

Avantageusement, chacune des nappes n'a de coupure que d'un côté, du intérieur comme indiqué plus haut. Et la coupure de ce côté est avantageusement nette.

Le faisceau produit peut être un faisceau complémentaire d'un faisceau à coupure, pour donner un faisceau route.

La largeur de la bande non éclairée, ainsi que sa position angulaire, peuvent être modifiées en fonction des conditions de circulation.

La taille d'une bande non éclairée dans le faisceau peut augmenter lorsque l'écart angulaire avec l'axe du dispositif d'éclairage augmente. L'étendue angulaire des bandes non éclairées, exprimée en %, peut varier de 0.5% au voisinage de l'axe du dispositif d'éclairage à plus de 4% sur les côtés.

De préférence, les modifications de la taille et de l'orientation des bandes non éclairées sont obtenues uniquement par extinction et/ou allumage de sources lumineuses sans déplacement mécanique.

Généralement, l'étendue verticale du faisceau en dessous de l'horizontale est au plus égale à 10%.

La nappe de base située vers le bas-côté de la route peut être formée par un projecteur dynamique suiveur de courbe DBL, dont le faisceau comporte une ligne de coupure avec un segment montant selon un angle d'au moins 45° par rapport à l'horizontale.

Avantageusement, la nappe de base située vers le bas-côté de la route par rapport à l'axe longitudinal du véhicule est composée, semblablement à l'autre nappe, de plusieurs nappes élémentaires, chaque nappe élémentaire étant limitée du côté intérieur par un bord essentiellement rectiligne montant, les bords rectilignes des différentes nappes élémentaires étant décalés angulairement, chaque nappe élémentaire correspondant à au moins une source lumineuse commandée par le moyen de commande et à un réflecteur associé. Si les nappes de base situées de part et d'autre de l'axe longitudinal du véhicule sont obtenues par des procédés identiques, au choix près du sens de l'axe transversal, la répartition angulaire des nappes élémentaires successives n'est pas nécessairement symétrique, notamment au voisinage de l'axe longitudinal du véhicule.

De préférence, les sources lumineuses sont des LEDs placées sur un même plan horizontal (ou sensiblement horizontal) de circuit imprimé. Les LEDs peuvent être disposées pour éclairer vers le bas.

Avantageusement, le bord rectiligne des nappes élémentaires est obtenu par alignement d'images de tailles variées, données par un réflecteur de type parabolique. Le réflecteur est défini, avant décalage angulaire de son axe optique latéralement par rapport à l'axe longitudinal du véhicule, pour qu'en tout point M du réflecteur, il existe un point foyer Fn de l'émetteur tel que le rayon issu de ce point Fn et atteignant le point M, après déviation éventuelle par une protection transparente de la source, soit renvoyé suivant une direction parallèle à une direction prédéterminée, perpendiculaire à l'axe transversal du véhicule ( axe X des figures) , unique pour chaque partie latérale du réflecteur, et tel que tous les autres rayons atteignant le point M soient déviés d'un côté déterminé, à droite ou à gauche selon l'implantation du dispositif.

L'émetteur de la source lumineuse peut avoir une forme rectangulaire ou carrée, avec deux côtés parallèles à l'axe optique du dispositif, le point foyer Fn est situé à l'un des coins de l'émetteur, et le réflecteur comporte quatre secteurs correspondant aux quatre coins de l'émetteur. Les quatre secteurs du réflecteur peuvent avoir des surfaces réfléchissantes légèrement différentes admettant pour foyers des coins différents de l'émetteur, deux secteurs étant situés d'un côté du plan vertical passant par un des côtés de l'émetteur, et deux secteurs étant situés de l'autre côté.

Pour obtenir un faisceau ayant la plus grande intensité possible et une étendue verticale limitée en dessous de l'horizontale, le réflecteur associé à une source lumineuse est déterminé pour transformer les ondes sphériques hypothétiques issues des foyers (points Fn) en une onde plane unique (système focalisé).

Chaque côté du réflecteur peut donner une surface d'onde plane différente et un décalage existe entre des secteurs du réflecteur situés de chaque côté. En effet, les différents secteurs du réflecteur ne peuvent avoir au plus qu'un seul point en commun.

Une partie du faisceau essentiellement située au-dessus de l'horizontale peut être réalisée par un côté du réflecteur et, pour l'autre côté du réflecteur, la surface d'onde plane est inclinée vers le haut par rapport à la direction verticale d'un angle ($\alpha$h) , avantageusement d'environ 5°.

L'invention consiste, mises à part les dispositions exposées ci-dessus, en un certain nombre d'autres dispositions dont il sera plus explicitement question ci-après à propos d'exemples de réalisation décrits avec référence aux dessins annexés, mais qui ne sont nullement limitatifs. Sur ces dessins :

Fig. 1 est une vue schématique de dessus d'un véhicule automobile équipé d'un dispositif d'éclairage selon l'invention donnant un faisceau comportant une zone non éclairée.

Fig. 2 montre, semblablement à Fig. 1, le véhicule dont le dispositif d'éclairage donne un faisceau avec une bande non éclairée de largeur et d'orientation différentes par rapport à Fig. 1.

Fig. 3 est un schéma d'un faisceau lumineux obtenu avec un dispositif selon l'invention et dans lequel une nappe lumineuse est formée par un projecteur dynamique DBL, et l'autre nappe est composée de plusieurs nappes élémentaires en partie superposées.

Fig. 4 est une vue semblable à Fig. 3 avec création d'une bande non éclairée.

Fig. 5 montre, semblablement à Fig. 4, un faisceau avec une bande non éclairée plus large que sur Fig. 4 et déplacée angulairement.

Fig. 6 est un schéma illustrant l'obtention d'une bande non éclairée à partir de deux nappes de base composées chacune de cinq nappes élémentaires en partie superposées.

Fig. 7 montre, semblablement à Fig. 6, une autre combinaison des nappes élémentaires éclairées et éteintes

donnant une bande non éclairée déplacée angulairement.

Fig. 8 montre, semblablement à Fig. 6 et 7, la réalisation d'une bande non éclairée plus large.

Fig. 9 montre, semblablement à Fig. 7, un cas extrême où tous les faisceaux élémentaires de droite sont allumés alors que tous ceux de gauche sont éteints.

Fig. 10 est une vue schématique de dessus d'une partie d'un dispositif d'éclairage avec cinq modules disposés selon une configuration convexe.

Fig. 11 montre, semblablement à Fig. 10, une variante avec une disposition concave des modules.

Fig. 12 est un schéma à échelle réduite des zones éclairées par des nappes élémentaires sur un écran orthogonal à l'axe optique.

Fig. 13 montre, semblablement à Fig. 12, la zone éclairée d'un écran lorsque certaines des nappes sont éteintes.

Fig. 14 est une représentation schématique en perspective d'un module du dispositif d'éclairage selon l'invention, vu depuis l'avant.

Fig. 15 est une vue schématique arrière du réflecteur de Fig. 14 sans le circuit imprimé de la source lumineuse.

Fig. 16 est une vue schématique en plan d'une diode électroluminescente rectangulaire et d'un réflecteur entourant cette diode.

Fig. 17 est une représentation dans un plan horizontal de l'émetteur rectangulaire de la diode de Fig.16.

Fig. 18 est une représentation dans un plan vertical de l'émetteur de Fig.16, l'axe OZ étant vertical vers le bas.

Fig.19 est un schéma avec trièdre en perspective.

Fig.20 est un schéma illustrant la sortie d'un rayon lumineux d'une diode électroluminescente encapsulée.

Fig.21 est un schéma illustrant la sortie d'un rayon lumineux d'une diode électroluminescente protégée par une lame transparente, et

Fig.22 est un réseau de courbes isolux obtenu avec un dispositif selon l'invention.

En se reportant aux Fig. 1 et 2, on peut voir un véhicule 1 équipé d'un dispositif d'éclairage donnant un faisceau lumineux 2 s'étendant de part et d'autre de l'axe optique Q du dispositif, et composé de deux nappes de base 3, 4. Le faisceau lumineux 2 a été représenté comme issu d'un seul point du véhicule. Généralement, deux projecteurs sont prévus à l'avant, l'un à droite, l'autre à gauche, chaque projecteur donnant un faisceau composé de deux nappes qui fusionnent. On peut considérer pour simplifier qu'un seul faisceau lumineux 2 est produit.

Au moins une source lumineuse, telle que les sources 18a, 18b, 18c, 18d, 18e schématisées sur les Fig. 10 et 11, est prévue pour chaque nappe et est avantageusement formée par une diode électroluminescente, en abrégé LED.

Un moyen de commande 5 (Figs. 10, 11) est prévu pour éteindre ou allumer, au moins en partie, chaque nappe 3, 4 selon les conditions de circulation. Le moyen de commande 5 peut comprendre une caméra, un détecteur infrarouge, un système radar ou analogue, propre à détecter, par exemple, un véhicule 6 (Fig. 1) en sens contraire, ou un véhicule circulant dans le même sens devant le véhicule 1, ou encore un piéton 7 (Fig. 2) marchant sur la chaussée 8 ou à proximité.

Le moyen de commande 5 permet de créer une bande sombre N1 ou N2 non éclairée comprise entre deux zones éclairées 9, 10 pour éviter l'éblouissement d'autres usagers de la route. Un éclairage sur les côtés est conservé grâce aux zones 9, 10.

La largeur de la bande non éclairée, de même que sa position angulaire par rapport à l'axe optique du dispositif est modifiée selon les conditions de circulation. Ainsi, sur Fig. 1, la largeur L1 de la bande non éclairée est supérieure à la largeur L2 sur Fig. 2. En outre, la bande N2 est déplacée angulairement vers la droite par rapport à la bande N1.

Dans l'exemple représenté sur Fig. 1 et Fig. 2, ainsi que dans les explications qui suivent, on considère un trafic à droite (TD). Pour un trafic à gauche (TG), on peut adapter immédiatement les explications fournies et les dispositions décrites par symétrie.

Généralement, le faisceau lumineux produit par le dispositif d'éclairage considéré, est un faisceau complémentaire à un faisceau à coupure, notamment de type code, pour donner un faisceau route à grande portée. L'étalement vertical du faisceau complémentaire est réduit, notamment pour éviter d'éclairer vers le bas à une faible distance de quelques mètres. Ce faisceau complémentaire est désigné par l'abréviation SHB (Selective High Beam / faisceau route sélectif).

Fig. 3 illustre schématiquement la trace sur un écran orthogonal à l'axe optique d'un faisceau lumineux 2 composé de deux nappes de base 3, 4 selon l'invention. La nappe de base 3 est formée par le faisceau 11 d'un projecteur du type DBL (DBL = Dynamic Bending Light) ou projecteur dynamique suiveur de courbe. La zone éclairée du faisceau 11 vers la gauche est située au-dessous d'une ligne de coupure horizontale 12. L'extrémité droite de la ligne 12 est définie par un segment 13, ou remontée de coupure, montant selon un angle $\alpha$ par rapport à l'horizontale. De préférence, l'angle $\alpha$ est avantageusement égal ou supérieur à 45°. La zone 14 du faisceau située à droite du segment 13 éclaire le côté droit de la chaussée, ainsi que le bas-côté, et ne provoque pas d'éblouissement de conducteurs de véhicules venant en sens inverse ou suivis, qui sont protégés par la ligne de coupure 12.

Le faisceau 11 peut être déplacé angulairement vers la gauche de Fig. 3 (ou vers la droite) comme indiqué par une flèche sur Fig.4 et 5, ce qui entraîne le déplacement du segment 13. Avec un projecteur type DBL à LEDs

allumées successivement pour provoquer le déplacement angulaire du faisceau 11, aucun déplacement mécanique du projecteur n'est nécessaire. En variante, on peut utiliser un projecteur DBL monté rotatif autour d'un axe vertical, le déplacement angulaire du faisceau 11 étant alors commandé par un moteur d'entraînement. Quel que soit le type de projecteur DBL utilisé, la rotation du faisceau 11 est commandée par le moyen de commande 5 lorsque la création d'une bande non éclairée est souhaitée ; la commande habituelle du DBL est alors débrayée.

Pour obtenir un feu de route, on complète le faisceau 11 et la nappe 3 du DBL par une deuxième nappe 4 s'étendant du côté des véhicules venant en sens inverse, c'est-à-dire du côté gauche pour l'exemple d'un trafic à droite, ou roulant dans la même direction que le véhicule et situés en avant et sur la même voie ou les voies à gauche de son axe longitudinal.

La nappe 4, lorsqu'elle est totalement éclairée, correspond à une bande rectangulaire 15a-15e située principalement au-dessus du bord de coupure 12 qu'elle recouvre de préférence légèrement en partie basse. La bande s'étend vers la droite au-delà de la remontée de coupure 13.

La bande 15a-15e est composée de plusieurs nappes élémentaires 15a, 15b, 15c, 15d, 15e (cinq nappes élémentaires dans l'exemple envisagé), en partie superposées. Chaque nappe élémentaire est limitée vers l'intérieur, à son extrémité droite (celle tournée vers le bas côté de la chaussée), par un bord rectiligne net essentiellement vertical 16a ... 16e. La lumière de chaque nappe est située à gauche de ce bord net et aucune exigence n'est formulée quant à son bord gauche. Les bords droits rectilignes 16a...16b sont décalés angulairement, le bord 16a étant le plus à droite et le bord 16e le plus à gauche (cas d'un trafic à droite).

Les nappes élémentaires 15a... 15e sont obtenues avantageusement à l'aide de cinq modules 17a...17e (Fig. 10). Chaque module comporte au moins une source lumineuse 18a ... 18e formée par une LED et un réflecteur 19a... 19e conçu pour donner une nappe élémentaire ayant un bord rectiligne net 16a ... 16e. La concavité des réflecteurs est tournée vers l'avant du véhicule et, selon l'exemple de Fig. 10, les réflecteurs sont répartis suivant un arc de courbe convexe 20, les axes optiques Qa ... Qe étant sensiblement orthogonaux à l'arc 20 et divergeant vers l'extérieur. Avec cette disposition, le module 17a le plus à droite va donner la nappe élémentaire 15a la plus à droite de Fig. 3 tandis que le module 17e le plus à gauche va donner la nappe 15e de Fig. 3.

Fig. 11 illustre une variante de réalisation selon laquelle les modules 17a ... 17e sont disposés suivant un arc de courbe concave 21. Dans ce cas, la disposition des modules est inversée par rapport à Fig. 10. La nappe élémentaire 15a la plus à droite sur Fig. 3 est produite par le module 17a situé le plus à gauche sur Fig. 11.

Un dispositif d'éclairage tel que celui des Fig.10 ou 11 est prévu de chaque côté avant du véhicule avec un projecteur DBL correspondant.

Comme illustré sur Fig. 4, l'extinction des nappes élémentaires 15a, 15b, 15c fait apparaître une bande centrale non éclairée N3 limitée sur la gauche par le bord net vertical 16d de la nappe 15d qui est restée allumée et sur la droite par le segment montant 13. Ce segment 13 est déplacé angulairement vers la gauche par rapport à Fig. 3.

Fig. 5 montre un autre cas de figure, dans lequel la bande non éclairée N4 est plus large que sur Fig. 4 et a été déplacée angulairement vers la gauche. Le segment 13 s'est déplacé avec le faisceau 11.

Sur les Figs. 3-5, pour un trafic à droite la lumière des nappes élémentaires 15a ... 15e, s'étend à gauche du bord intérieur droit vertical des nappes. Le faisceau DBL forme la nappe avec lumière à droite du segment montant 13. Dans le cas d'un trafic à gauche, le DBL formerait une nappe avec lumière à gauche du segment montant, tandis que les nappes élémentaires superposées s'étendraient à droite des bords verticaux limites.

Fig. 6 illustre schématiquement un faisceau lumineux obtenu avec deux nappes de base 3, 4 composées chacune de plusieurs nappes élémentaires, à savoir cinq nappes élémentaires 15a...15e pour la nappe 4 et 15a'...15e' pour la nappe 3 dans l'exemple considéré.

Le dispositif d'éclairage comporte alors cinq modules tels que ceux de Fig. 11 pour donner les nappes 15a... 15e dans lesquelles la lumière est située à gauche de la coupure verticale 16a...16e, et cinq autres modules semblables prévus pour donner les nappes 15a'...15e' avec lumière à droite de la coupure verticale.

Pour obtenir des figures similaires avec la lumière s'étendant vers la droite on utilise pour chaque système individuel son symétrique par rapport au plan de symétrie vertical de sa source lumineuse, à savoir l'émetteur de la LED considérée.

Pour faciliter les explications, les nappes 15a...15e et 15a'...15e' ont été décalées verticalement sur Fig. 6 à Fig. 9. En réalité, ces nappes élémentaires sont toutes superposées suivant un même étalement vertical, comme illustré à la ligne inférieure de chacune des Figs.6 à 9.

L'allumage ou l'extinction séquentielle d'un module permet de déplacer angulairement la bande Nn non éclairée et de modifier sa largeur.

Selon le schéma de Fig. 6, les nappes 15a, 15b et 15a', 15b', 15c' et 15d' sont éteintes, seules les nappes 15c, 15d, 15e et 15e' sont allumées. On obtient alors une bande non éclairée N5 limitée sur la gauche par le bord vertical 16c de la bande 15c et sur la droite par le bord vertical 16e' de la bande 15e'.

Sur Fig. 7, la combinaison des nappes allumées et éteintes donne une bande non éclairée N6 limitée à gauche par le bord vertical 16d de la nappe 15d et sur la droite par le bord vertical 16d' de la nappe 15d'. La bande non éclairée

N6 de Fig. 7 est déplacée angulairement par rapport à celle de Fig. 6 pour une même largeur.

Fig.8 illustre le cas d'une bande non éclairée N7 plus large que sur Fig.7 obtenue en ne maintenant éclairées que les nappes 15e, 15d', 15e'. La bande N7 est limitée à gauche par le bord vertical 16e de la bande 15e et à droite par le bord 16d' de la bande 15d'.

Fig.9 correspond à un cas extrême où toutes les nappes à gauche sont éteintes alors que toutes les nappes à droite sont allumées. La bande sombre N8 est située à gauche et limitée, sur la droite, par le bord vertical 16a'.

Les Fig.12 et 13 illustrent schématiquement, à une échelle réduite suivant la direction horizontale, les nappes élémentaires 15a'...15e' s'étendant à droite, toutes allumées sur Fig.12 alors que seules les nappes 15c', 15d', 15e'sont allumées sur Fig.13.

Ainsi, en utilisant simultanément au moins deux systèmes de nappes élémentaires superposées et décalées, il est possible de créer un faisceau de type route en y aménageant un trou vertical correspondant à la bande sombre Nn, dont l'orientation et la largeur peuvent être modifiées.

L'absence d'éblouissement pour les usagers situés dans la zone éteinte Nn et l'obtention d'une bonne portée du faisceau partout ailleurs impose une grande netteté pour les coupures verticales 16a...16e,16a'...16e'.

Cet objectif peut être atteint de deux manières :

- soit par imagerie nette d'un émetteur (surface d'émission d'une LED) ayant au moins un bord rectiligne ;
- soit par alignement d'images le long d'une ligne de coupure.

Il est possible de travailler par imagerie, mais cela ne constitue pas un optimum dans le cas considéré car il faut alors travailler à ouverture faible et donc avec un mauvais rendement en flux. Les autres bords nets des images ainsi obtenues de l'émetteur (LED) sont par ailleurs plus gênants qu'utiles.

Une solution préférée, selon l'invention, consiste à utiliser le principe de création de coupure par alignement d'images de tailles variées. Le système optique d'un module tel que 17a est conçu pour créer des coupures verticales correspondant au bord 16a tout en maintenant les LEDs positionnées sur un même plan horizontal et ainsi sur un même circuit imprimé 26 (Fig.14). Ceci est avantageux pour des raisons de facilité d'intégration, de précision de positionnement et finalement de coût.

L'invention prévoit une famille de surfaces réfléchissantes adaptées à des LEDs à émetteurs rectangulaires 22 (Fig.16, 17), y compris émetteurs carrés, qui sont encapsulés dans un matériau transparent protecteur 23, de surface de sortie plane 24 (Fig.18, 20) ou protégés par une lame plane 25 à faces parallèles (Fig.21).

Le cas traité est celui de LEDs telles que figurant sur Fig.21 émettant la lumière vers le bas suivant une direction moyenne verticale -OZ et disposées sur une plaque 26 (Fig.14) horizontale. En outre, on considère des faisceaux avec lumière à droite du bord de coupure vertical. Par symétrie par rapport au plan vertical de symétrie de l'émetteur (LED) ou par rapport à un plan horizontal, on peut obtenir les trois autres cas : lumière à gauche, et LED émettant vers le haut.

Le réflecteur 19a, selon l'invention, est défini, avant décalage angulaire de son axe optique latéralement par rapport à l'axe longitudinal du véhicule, par les propriétés suivantes : pour tout point M (Fig.16) du réflecteur il existe un point foyer Fn de l'émetteur tel que le rayon lumineux i1 issu de ce point et atteignant M, après déviation par la protection transparente, soit renvoyé suivant une direction r1 parallèle à une direction prédéterminée Vs, perpendiculaire à l'axe X transversal du véhicule, unique pour chaque partie latérale (R1,R2) ou (R3,R4) du réflecteur.

Compte tenu de l'objectif consistant à obtenir un faisceau ayant la plus grande intensité possible et une étendue verticale limitée en dessous de l'horizontale, on transforme les ondes sphériques hypothétiques issues des foyers (points Fn) en une onde plane unique (système focalisé). Il peut donc y avoir au plus deux valeurs différentes de Vs par réflecteur, correspondant respectivement aux deux moitiés de réflecteurs (R1,R2) (R3,R4). Sachant qu'une partie du faisceau essentiellement située au-dessus de l'horizontale est réalisée par un côté du réflecteur et que celle réalisée par l'autre côté est alors essentiellement descendante et potentiellement trop basse pour un faisceau route confortable, on peut orienter Vs verticalement (voir Fig.18 ) afin de gérer partiellement l'étendue verticale du faisceau complet.

En négligeant dans un premier temps l'effet de la protection transparente de l'émetteur, on voit que Fn (Fig. 16, 17) doit être situé à l'un des quatre coins de l'émetteur 22, suivant le secteur du réflecteur à calculer. Dans une approche 3D (trois dimensions), lorsque l'on s'écarte du plan de sortie de l'émetteur, vers le bas dans l'exemple considéré, il faut, pour certains secteurs, changer de foyer, lequel reste toutefois confondu avec l'un des coins de l'émetteur. Comme visible sur Fig.14 et 15, le réflecteur est alors composé de quatre secteurs R1, R2, R3, R4 de surfaces réfléchissantes légèrement différentes ce qui explique les espaces visibles sur Fig.14 et 15 entre les secteurs voisins. Les secteurs R1, R2 sont situés d'un côté du plan vertical contenant le segment (F1, F2) et les secteurs R3, R4 de l'autre côté. Le détail des surfaces adaptées, et la façon de déterminer les limites entre secteurs correspondants à un foyer donné sont exposés dans les calculs donnés à la fin de la description.

Les résultats correspondent à une « focale moyenne » par rapport à la LED utilisée : la focale est de 6mm pour une LED dont le grand côté de l'émetteur a une longueur de 5.4 mm. Pour la partie droite du réflecteur l'angle d'inclinaison de la direction montante Vs, par rapport à l'horizontale, est $\alpha_h = 5^\circ$ (Fig. 18).

On ne choisit pas la même surface d'onde plane de chaque côté du réflecteur, d'où un décalage qui apparaît entre les secteurs R1, R3 sur Fig.15. Un secteur du miroir éclaire vers le haut et un autre éclaire vers le bas, si aucune correction n'est effectuée. Pour remonter le faisceau du miroir qui éclaire vers le bas, on choisit une onde plane de sortie Σ inclinée vers le haut, comme illustré sur Fig.18. Pour une application de série industrielle, on utilisera des émetteurs 22 plus courts et des focales plus grandes afin de minimiser l'étendue verticale du faisceau, la consommation électrique et le coût.

La Figure 22 donne un exemple de courbes isolux d'un faisceau pour une LED à deux puces et 160 lumens (puces de même luminance que dans le cas précédent) avec une focale doublée de l'ordre de 14,3 mm.

Les courbes sont essentiellement tangentes suivant le bord intérieur gauche vertical 16a', et la nappe lumineuse 15a' s'étend vers la droite de 16a'. Les contours simplifiés des Fig. 12 et 13 rappellent les contours réels des isolux de Fig.22.

Enfin, l'analyse du besoin pour la fonction SHB (bande sombre) montre que la discrétisation de la taille des bandes sombres potentielles dans le faisceau n'a pas à être constante angulairement. On peut avoir des bandes sombres N7 (Fig.8) plus larges lorsque l'écart angulaire avec l'axe longitudinal du véhicule augmente. Ceci permet de diminuer le nombre de LEDs et de nappes lumineuses élémentaires. Par ailleurs, l'intensité nécessaire diminue lorsque l'écart angulaire à l'axe du véhicule augmente, car on cherche à suivre le profil d'intensité d'un faisceau route classique. Ceci permet ou bien de choisir des LEDs de plus faible puissance pour les bandes éclairées latérales, ou de réduire la taille des systèmes optiques. Globalement ces caractéristiques permettent de minimiser le coût du système.

La solution avantageuse proposée par l'invention n'est pas un système d'imagerie, d'où un fonctionnement à forte ouverture et une efficacité et une compacité très bonnes.

Il est possible de réaliser le dispositif d'éclairage sans faire appel à un déplacement mécanique. Toutes les LEDs sont situées sur un même plan horizontal ce qui facilite la fabrication.

Fig.16 est une coupe schématique du réflecteur concave (19a) par le plan horizontal émetteur de la LED. Quatre quadrants I, II, III, IV sont indiqués, correspondant aux secteurs du réflecteur et aux quatre sommets F1, F2, F3, F4 du contour rectangulaire 22 de l'émetteur de centre O. Un secteur du réflecteur compris dans un quadrant admet comme foyer le sommet correspondant.

Fig. 17 est une représentation, avant décalage angulaire de l'axe optique du module latéralement par rapport à l'axe longitudinal du véhicule, dans un plan horizontal parallèle à l'axe transversal du véhicule O X et à l'axe longitudinal OY, tandis que Fig. 18 est une représentation de l'émetteur dans le plan vertical YOZ.

Fig.19 est une vue en perspective du trièdre OXYZ, avec une direction de rayon lumineux $d_0$ d'angle polaire θ et d'angle de site φ.

Fig.20 est une coupe verticale schématique d'un émetteur dont la face de sortie est dans le plan OXY. L'émetteur est protégé par une lame de matériau transparent d'épaisseur désignée par e, la face active 24 de l'émetteur étant située à une distance δ au dessus de la lame protectrice. Lorsque la LED est encapsulée δ = 0.

Sur Fig.18 on a représenté la trace d'une surface d'onde de sortie plane Σ, produite par le réflecteur . Le vecteur directeur $V_s$ de cette surface d'onde est orthogonal à la direction OX et peut former un angle αh avec la direction OY ; dans ce cas la surface d'onde Σ est inclinée de cet angle αh.. Les composantes du vecteur directeur $V_s$ suivant les axes OX, OY et OZ sont alors : 0, cos αh et sin αh.

On considère la configuration des foyers pour que tous les rayons réfléchis se trouvent à droite du bord vertical défini par les rayons réfléchis parallèles à l'axe optique du réflecteur.

La surface d'un secteur du réflecteur est déterminée pour que le chemin optique soit constant entre le foyer de ce secteur et la surface d'onde plane de sortie, avec prise en compte de la couche protectrice de la LED.

*Distance d'un point M du réflecteur à la surface d'onde* :$\overrightarrow{OM} \cdot \overrightarrow{VS}$ L'origine du trièdre trirectangle étant au point O situé sur la face de sortie de la source au droit du centre de l'émetteur rectangulaire,
θ étant l'angle polaire, hs = largeur de l'émetteur et Ls = longueur de l'émetteur, les quadrants I,II,III, IV et les foyers F1, F2, F3, F4 sont définis comme suit :

| | | |
|---|---|---|
| Quadrant I | $0 < \theta < \pi/2$ | coordonnées de F1 : hs/2 , Ls/2 , +e+ δ |
| Quadrant II | $\pi/2 < \theta < \theta_M$ | coordonnées de F2 : - hs/2 , Ls/2 , +e+ δ |
| Quadrant III | $-\pi/2 < \theta < 0$ | coordonnées de F3 : hs/2 , - Ls/2 , +e+ δ |
| Quadrant IV | $-\theta_M < \theta < -\pi/2$ | coordonnées de F4 : - hs/2 , - Ls/2 , +e+ δ |

Les familles de rayons à prendre en compte sont celles des rayons passant par un foyer Fn et de vecteur directeur $d_0$ ayant pour composantes selon OX, OY et OZ : sin θ cos φ , - cos θ cos φ, - sin φ avec θ angle polaire et φ angle de site (voir Fig.19).

*Cas d'une LED encapsulée (δ = o)* Comme illustré sur Fig.20 dans un plan vertical contenant F et faisant un angle θ avec -Y :

$l_1 = e / \sin \varphi$

Cordonnées de P $F_x + l_1 \cos \varphi \sin \theta$

$F_y - l_1 \cos \varphi \cos \theta$

$0$

Le vecteur directeur d2 du rayon lumineux sortant a pour composantes: $\sin \theta \cos \psi$ ; $- \cos \theta \cos \psi$ ; $- \sin \psi$ $\psi$ étant l'angle du vecteur d2 avec l'horizontale.

En désignant par $n_d$ l'indice de réfraction de la matière de la LED, la loi de réfraction s'écrit : $n_d \sin (\pi/2 - \varphi) = \sin (\pi/2 - \psi)$

d'où $\psi = \text{Arc}\cos (n_d \cos \varphi)$

Le chemin optique dans la source est $C_s = n_d\, l_1$

*Cas d'une LED protégée par une lame plate (Flat glass)*

On se reporte à Fig. 21 où les différents segments et angles sont indiqués.

$l_0 = \delta / \sin \varphi$

$l_1 = e / \sin \psi$

Cordonnées de P $F_x + ( l_0 \cos \varphi + l_1 \cos \psi) \sin \theta$

$F_y - ( l_0 \cos \varphi + l_1 \cos \psi) \cos \theta$

$0$

Le vecteur directeur d2 a mêmes composantes que le vecteur d0 considéré précédemment.

En désignant par $n_d$ l'indice de réfraction de la matière de la lame protectrice 25, la loi de réfraction s'écrit : $\sin (\pi/2 - \varphi) = n_d \sin (\pi/2 - \psi)$

d'où $\psi = \text{Arc}\cos (\cos \varphi / n_d)$

Le chemin optique dans la source et la lame protectrice est : $C_s = l_o + n_d\, l_1$

Equation optique générale :

$$M = P + \lambda \vec{d_2}$$

$$-\underbrace{\vec{OM} \cdot \vec{V_S}} + \lambda + C_S = K = \text{constante}$$

$$\vec{OP} \cdot \vec{V_S} + \lambda\, \vec{d_2} \cdot \vec{V_S}$$

d' où $\lambda (1 - \vec{d_2} \cdot \vec{V_s}) = K - C_s + \vec{OP} \cdot \vec{V_s}$ $\vec{OP} \cdot \vec{V_s} = P_y \cos \alpha_h$

$\varphi_{min}$ : la LED étant supposée de surface infinie, $\varphi_{min}$ est défini par $\lambda = o$ et , dans le cas de l'encapsulation seulement, $\text{Arc}\cos 1/n_d$

$\lambda = o \Leftrightarrow C_s = K + P_y \cos \alpha_h$ équation en $\varphi$.

En réalité, la construction 2D (c'est à dire en deux dimensions) de Fig.16 n'est valable, pour les quadrants II et IV, que dans une zone restreinte proche du plan de sortie de l'émetteur. Dans le reste de la zone considérée, il faut utiliser le foyer F1 et F3 du quadrant I et III respectivement.

*Détermination de la limite 3D (c'est à dire à trois dimensions) des zones.* A partir du calcul de la surface, connaissant P et le point M correspondant, on calcule la normale à la surface en M :

Vecteur unitaire de la normale :

$$\vec{n} = \frac{\text{(vecteur } V_s - \text{vecteur PM / mesure PM )}}{\text{mesure du vecteur (vecteur } V_s - \text{vecteur PM / mesure PM )}}$$

On considère maintenant le rayon atteignant M issu d'une source S, ayant pour coordonnées : S: - $F_x$ , $F_y$, $F_z$ (foyer du quadrant précédent).

Le(s) dioptre(s) du système de protection de la LED étant plan (s), dans une vue perpendiculaire à ce(s) dioptre (s), ici une vue de dessus, S, P et M sont alignés :

flat glass : $$\frac{\delta}{\sin\varphi}\cos\varphi + \frac{e}{\sin\psi}\cos\psi - \frac{M_z}{\sin\varphi}\cos\varphi = \sqrt{(M_x - S_x)^2 + (M_y - S_y)^2}$$ équation

en $\varphi$ puisque $\psi = \text{Arc cos}(\cos\varphi / n_d)$

d'où on tire les coordonnées de P comme lors du calcul de la surface :

$$P = \left| \begin{array}{l} S_x + (\delta/tg\varphi + e/tg\psi) \dfrac{M_x - S_x}{\sqrt{(M_x - S_x)^2 + (M_y - S_y)^2}} \\ S_y + (\delta/tg\varphi + e/\ tg\psi) \dfrac{M_y - S_y}{\sqrt{(M_x - S_x)^2 + (M_y - S_y)^2}} \\ 0 \end{array} \right.$$

Encapsulée:

$$\frac{e}{tg\varphi} - \frac{M_z}{tg\psi} = \sqrt{(M_x - S_x)^2 + (M_y - S_y)^2}$$

$$P = \left| \begin{array}{l} S_x + \dfrac{e \qquad M_x - S_x}{tg\varphi\sqrt{(M_x - S_x)^2 + (M_y - S_y)^2}} \\ \\ etc. \end{array} \right.$$

Dans les deux cas, le rayon réfléchi a pour direction $\vec{R} = \vec{PM} - 2\,(\vec{PM}.\vec{n}\,)\vec{n}$

Le foyer utilisé pour le calcul est bien choisi si $R_x \geq o$.

**Revendications**

**1.** Dispositif d'éclairage, pour véhicule automobile, propre à donner un faisceau lumineux s'étendant de part et d'autre de l'axe optique et composé de plusieurs nappes, comprenant :

- au moins une source lumineuse pour chaque nappe,
- et un moyen de commande pour éteindre ou allumer, au moins en partie, chaque nappe selon les conditions de circulation afin de créer une bande non éclairée, pouvant être comprise entre deux zones éclairées, et notamment éviter l'éblouissement d'autres usagers de la route se déplaçant en sens inverse ou dans le même sens, tout en conservant un éclairage sur au moins un côté,

**caractérisé en ce que :**

- le faisceau est composé d'au moins deux nappes lumineuses de base (3,4), une nappe (3) s'étendant principalement d'un côté de l'axe optique (Q) et l'autre nappe (4) s'étendant principalement de l'autre côté de l'axe optique,
- chaque nappe lumineuse est limitée du côté intérieur par un bord essentiellement rectiligne montant,
- et au moins la nappe (4) située du côté des véhicules venant en sens inverse est composée de plusieurs nappes élémentaires (15a, 15b...15e) en partie superposées, chaque nappe élémentaire étant limitée du côté intérieur par un bord essentiellement rectiligne montant (16a, 16b, ... 16e), les bords rectilignes des différentes nappes élémentaires étant décalés angulairement en s'écartant de l'axe optique,
- au moins une source lumineuse (18a,..18e) contrôlée par le moyen de commande et un réflecteur associé (19a,....19e) étant prévus pour chaque nappe élémentaire.

**2.** Dispositif d'éclairage selon la revendication précédente, **caractérisé en ce que** chaque nappe lumineuse est limitée du côté intérieur par un bord essentiellement rectiligne montant et essentiellement vertical, et, de préférence n'est ainsi limitée que sur le côté.

**3.** Dispositif d'éclairage selon la revendication 1, **caractérisé en ce que** le faisceau produit est un faisceau complémentaire d'un faisceau à coupure pour donner un faisceau route.

**4.** Dispositif d'éclairage selon la revendication 1, **caractérisé en ce que** la largeur de la bande non éclairée (N1,...N8), ainsi que sa position angulaire, peuvent être modifiées en fonction des conditions de circulation.

**5.** Dispositif d'éclairage selon l'une quelconque des revendications 1 à 4, **caractérisé en ce que** la taille d'une bande non éclairée (N3...N8) dans le faisceau augmente lorsque l'écart angulaire avec l'axe du dispositif d'éclairage augmente.

**6.** Dispositif d'éclairage selon la revendication 5, **caractérisé en ce que** l'étendue angulaire des bandes non éclairées, exprimée en %, varie de 0.5% au voisinage de l'axe du dispositif d'éclairage à plus de 4% sur les côtés.

**7.** Dispositif d'éclairage selon l'une quelconque des revendications précédentes, **caractérisé en ce que** les modifications de la taille et de l'orientation des bandes non éclairées (N3...N8) sont obtenues uniquement par extinction et/ou allumage de sources lumineuses (18a...18e') sans déplacement mécanique.

**8.** Dispositif d'éclairage selon l'une quelconque des revendications précédentes, **caractérisé en ce que** l'étendue verticale du faisceau en dessous de l'horizontale est au plus égale à 10%.

**9.** Dispositif d'éclairage selon l'une quelconque des revendications précédentes, **caractérisé en ce que** la nappe de base (3) située vers le bas-côté de la route est formée par un projecteur dynamique suiveur de courbe DBL, dont le faisceau comporte une ligne de coupure (12) avec un segment (13) montant selon un angle d'au moins 45° par rapport à l'horizontale.

**10.** Dispositif d'éclairage selon l'une quelconque des revendications 1 à 8, **caractérisé en ce que** la nappe de base (3) située vers le bas-côté de la route par rapport à l'axe longitudinal du véhicule est composée, semblablement à l'autre nappe (4), de plusieurs nappes élémentaires (15a'...15e'), chaque nappe élémentaire étant limitée du côté intérieur par un bord essentiellement rectiligne montant (16a', ...16e'), les bords rectilignes des différentes nappes élémentaires étant décalés angulairement, chaque nappe élémentaire correspondant à au moins une source lumineuse (18a'...18e') commandée par le moyen de commande (5) et à un réflecteur associé (19a'...19e').

**11.** Dispositif d'éclairage selon l'une quelconque des revendications précédentes, **caractérisé en ce que** les sources lumineuses (18a,...18e ; 18a'...18e') sont des LEDs placées sur un même plan horizontal de circuit imprimé (26).

**12.** Dispositif d'éclairage selon la revendication 11, **caractérisé en ce que** les LEDs éclairent vers le bas.

**13.** Dispositif d'éclairage selon la revendication 11 ou 12, **caractérisé en ce que** le bord rectiligne (16a,...16e') des nappes élémentaires (15a,...15e') est obtenu par alignement d'images de tailles variées, données par un réflecteur (19a,...19e') de type parabolique.

**14.** Dispositif d'éclairage selon la revendication 13, **caractérisé en ce que** le réflecteur (19a,...) est défini, avant décalage angulaire de son axe optique latéralement par rapport à l'axe longitudinal du véhicule, pour qu'en tout point (M) du réflecteur, il existe un point foyer (Fn) de l'émetteur (22) tel que le rayon issu de ce point et atteignant le point (M), après déviation éventuelle par une protection transparente de la source, soit renvoyé suivant une direction parallèle à une direction prédéterminée, unique pour chaque partie latérale du réflecteur, et tel que tous les autres rayons atteignant le point (M) soient déviés d'un côté déterminé, à droite ou à gauche selon l'implantation du dispositif.

**15.** Dispositif d'éclairage selon la revendication précédente, **caractérisé en ce que** l'émetteur (22) de la source lumineuse a une forme rectangulaire ou carrée, avec deux côtés parallèles à l'axe optique du dispositif, le point foyer (Fn) est situé à l'un des coins de l'émetteur (22), et le réflecteur (19a) comporte quatre secteurs (R1, R2, R3, R4) correspondant aux quatre coins de l'émetteur.

**16.** Dispositif d'éclairage selon la revendication précédente, **caractérisé en ce que** les quatre secteurs (R1, R2, R3, R4) du réflecteur ont des surfaces réfléchissantes légèrement différentes admettant pour foyers des coins différents de l'émetteur (22), deux secteurs (R1, R2) étant situés d'un côté d'un plan vertical contenant un des bords de l'émetteur, et deux secteurs (R3, R4) étant situés de l'autre côté.

**17.** Dispositif d'éclairage selon l'une quelconque des revendications précédentes, **caractérisé en ce que,** pour obtenir un faisceau ayant la plus grande intensité possible et une étendue verticale limitée en dessous de l'horizontale, le réflecteur (19a) associé à une source lumineuse (18a) est déterminé pour transformer les ondes sphériques hypothétiques issues des foyers (points Fn) en une onde plane unique (système focalisé).

**18.** Dispositif d'éclairage selon la revendication précédente, **caractérisé en ce que** chaque côté du réflecteur donne une surface d'onde plane différente et un décalage existe entre des secteurs du réflecteur situés de chaque côté.

**19.** Dispositif d'éclairage selon la revendication précédente, **caractérisé en ce qu'**une partie du faisceau essentiellement située au-dessus de l'horizontale est réalisée par un côté du réflecteur et que, pour l'autre côté du réflecteur, la surface d'onde plane est inclinée vers le haut ($\alpha_h$) par rapport à la direction verticale.

**20.** Dispositif d'éclairage selon la revendication précédente, **caractérisé en ce que** la surface d'onde plane est inclinée

vers le haut d'un angle ($\alpha_h$) d'environ 5° par rapport à la direction verticale.

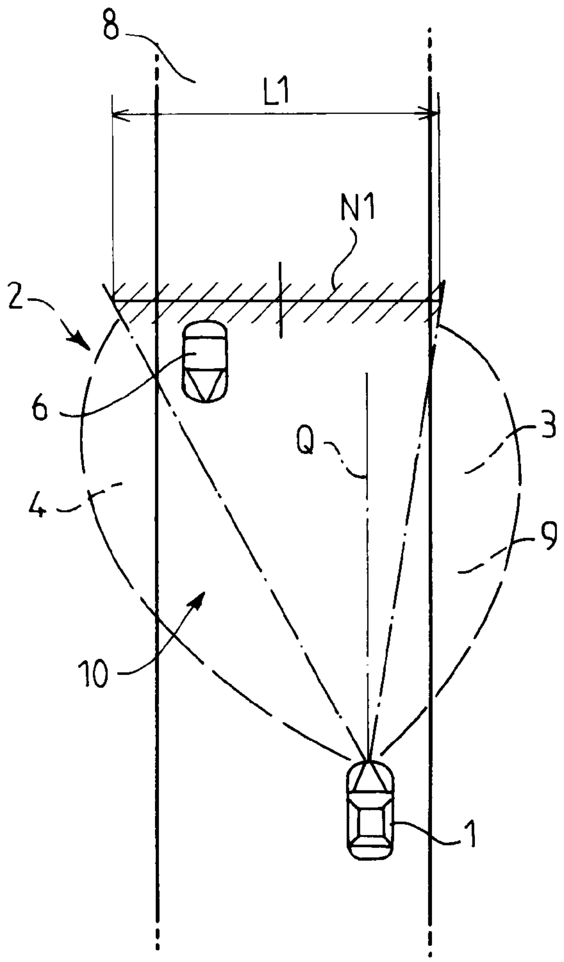


FIG.1

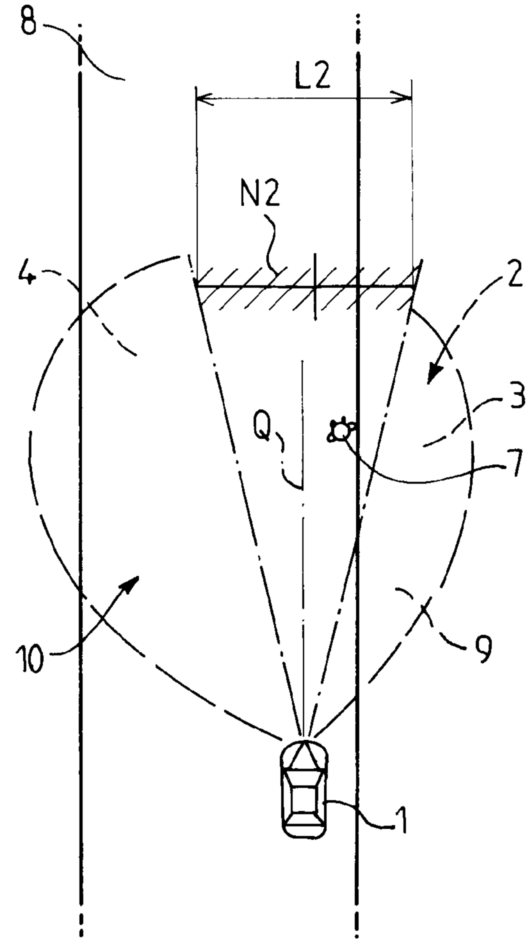


FIG. 2

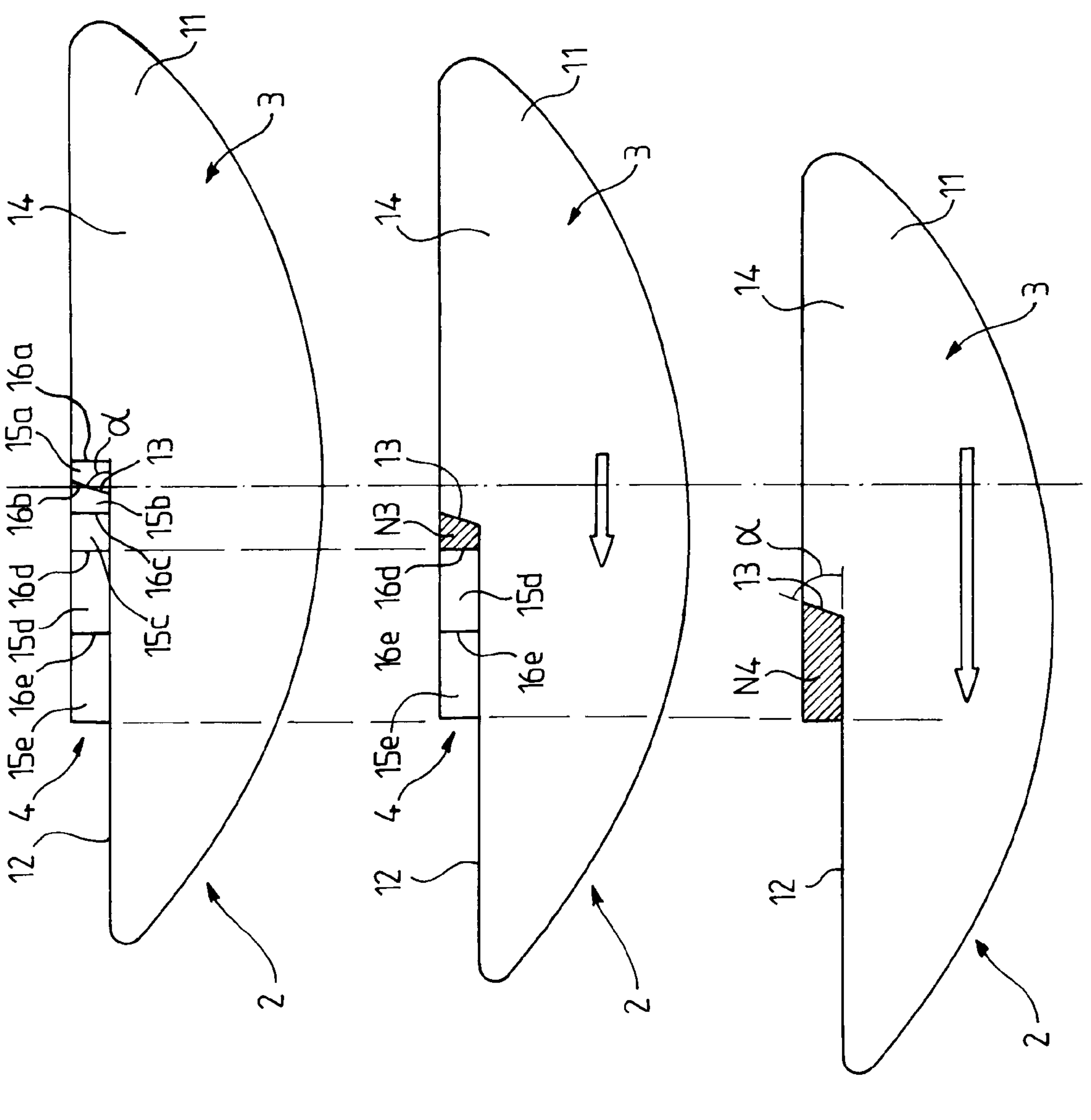


FIG.3

FIG.4

FIG.5

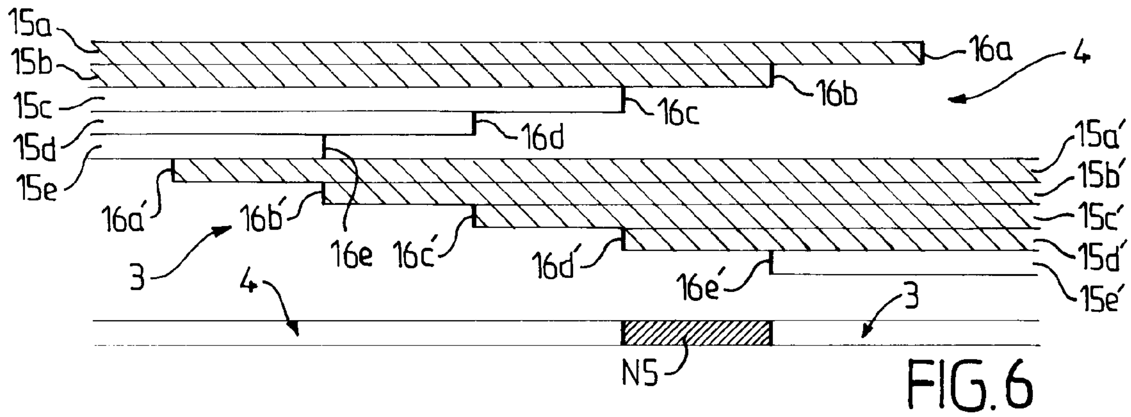


FIG.6

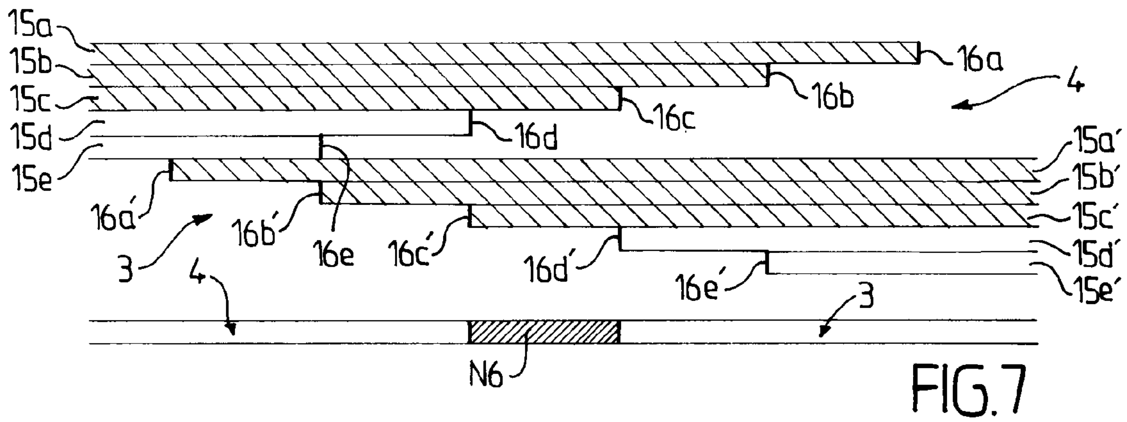


FIG.7

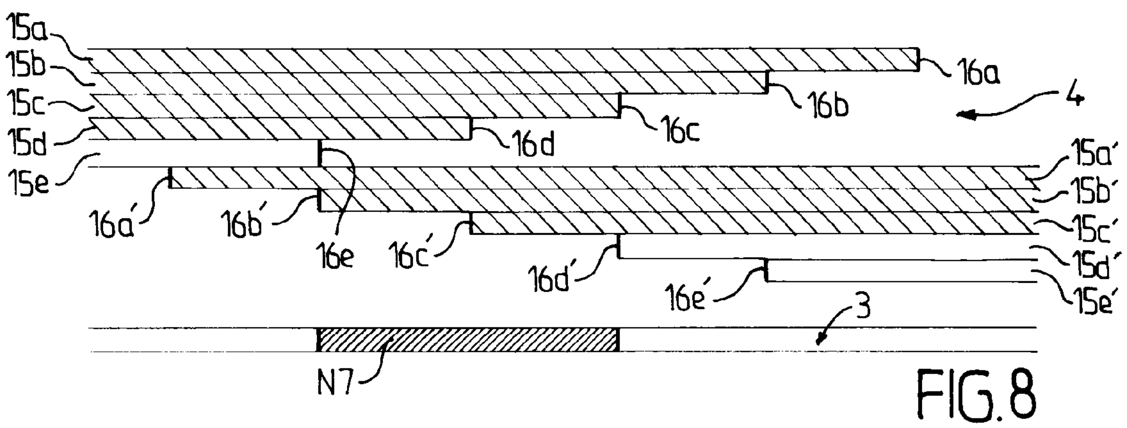


FIG.8

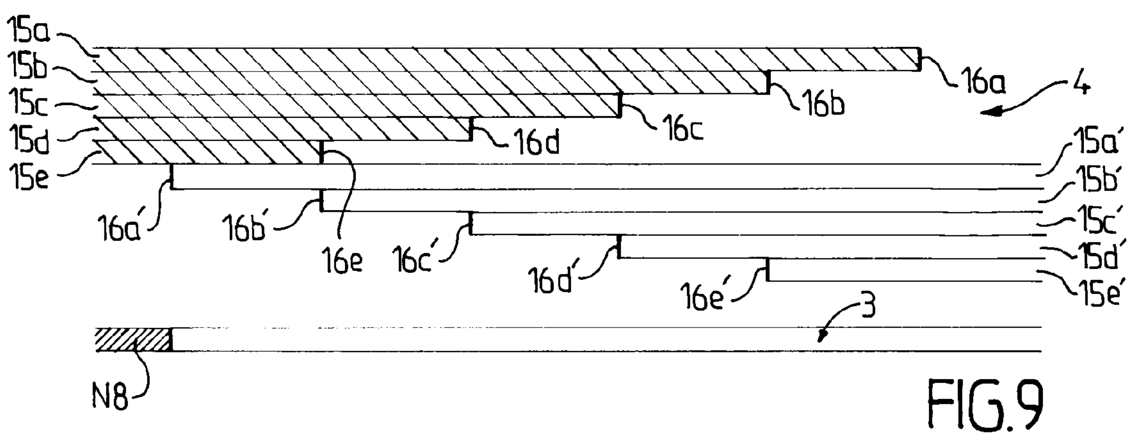


FIG.9

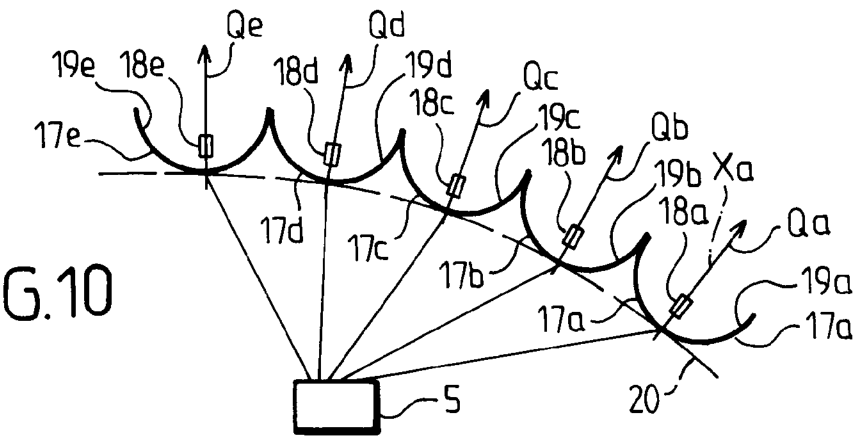


FIG.10

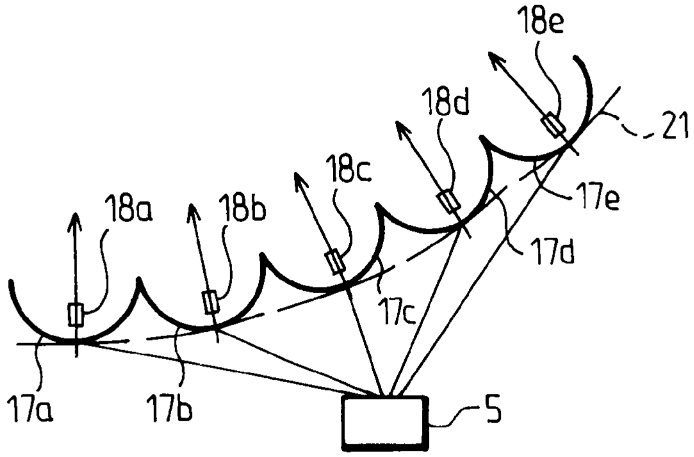


FIG.11

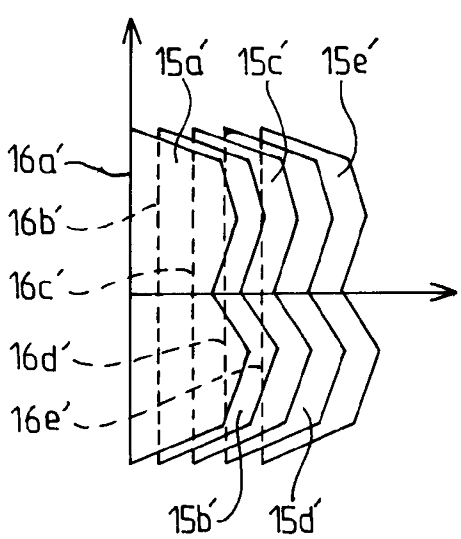


FIG.12

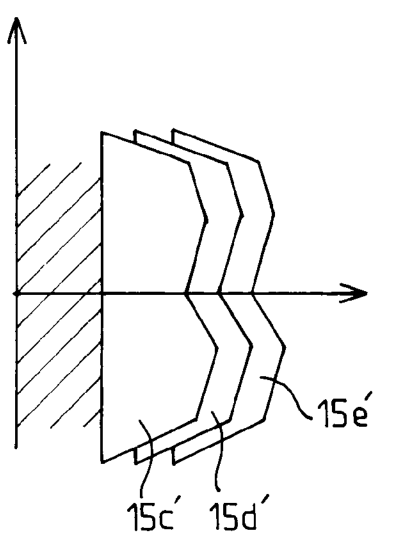


FIG.13

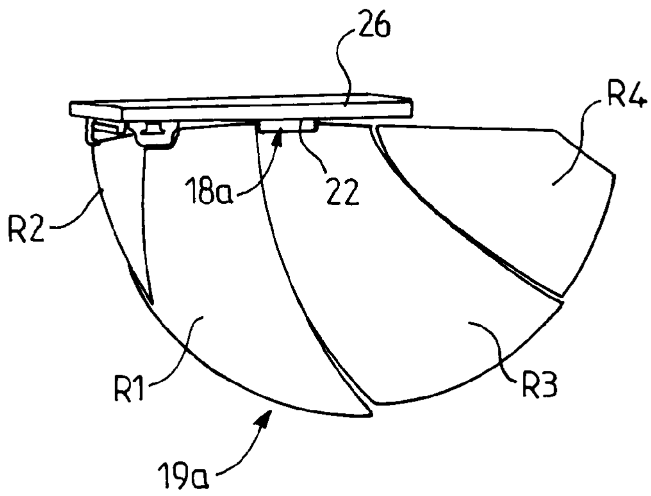


FIG.14

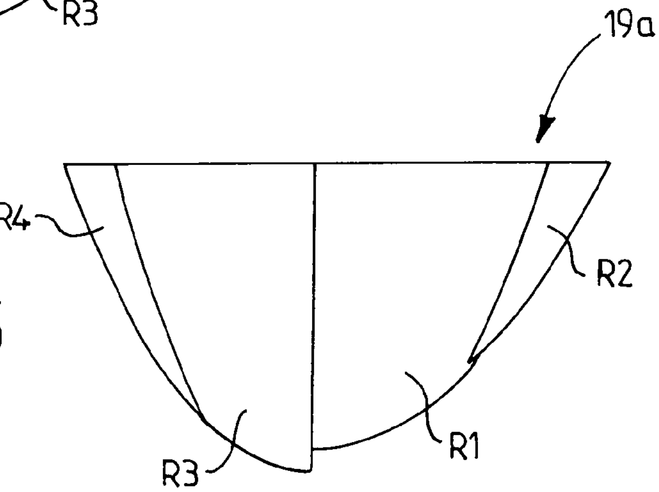


FIG.15

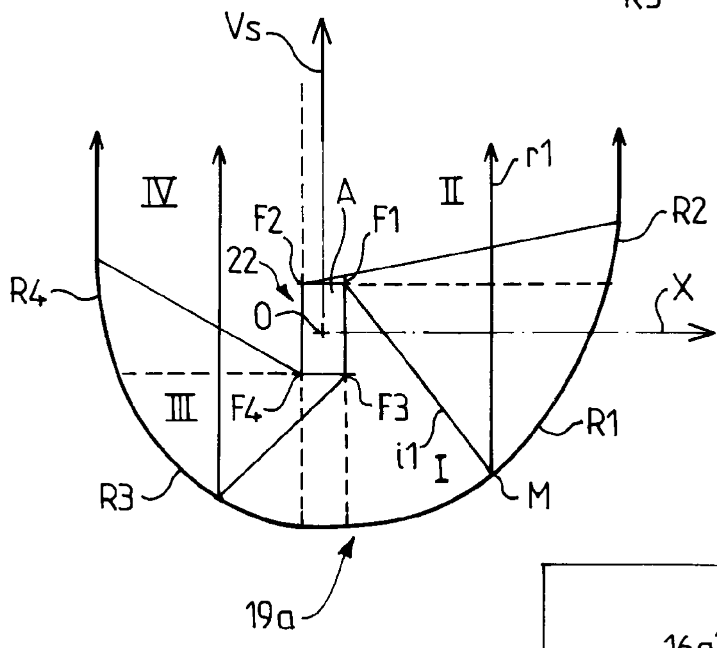


FIG.16

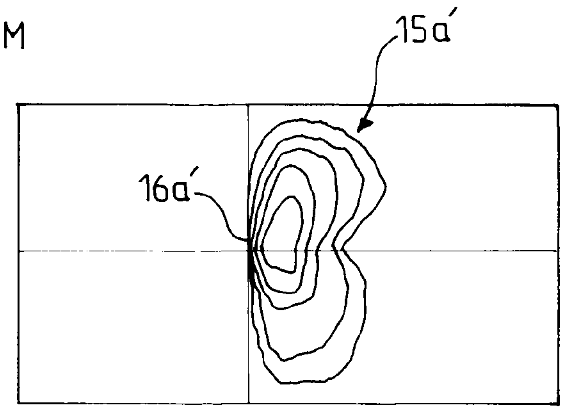


FIG.22

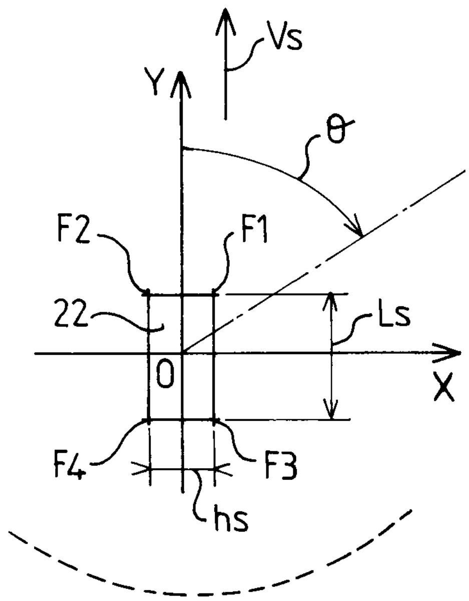


FIG.17

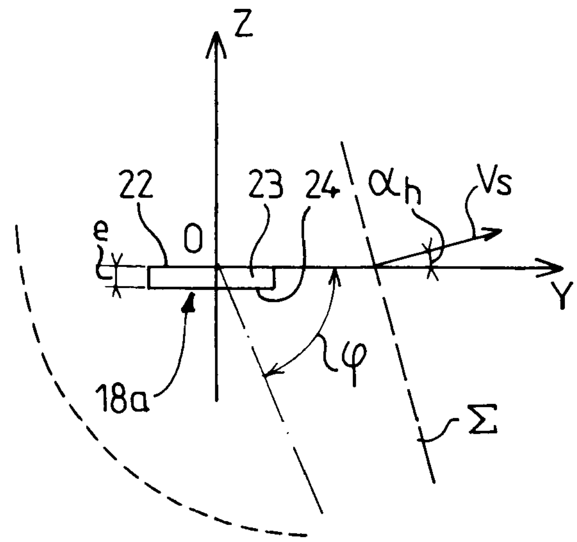


FIG.18

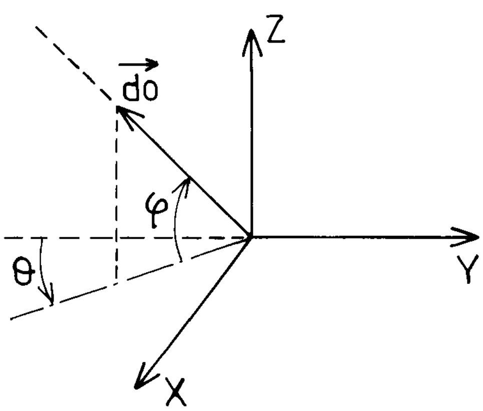


FIG.19

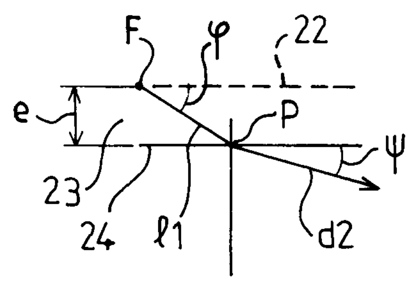


FIG.20

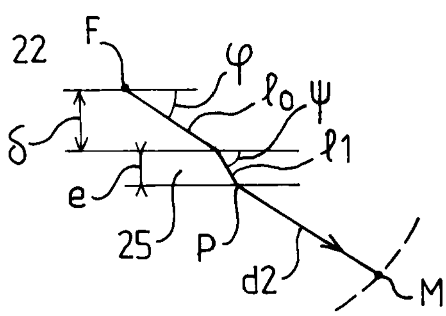


FIG.21

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 20070147055 A
- EP 1780462 A